# EUROPEAN PATENT APPLICATION

(11) **EP 4 152 218 A1**
(43) Date of publication of application: **22.03.2023**
(21) Application number: 21196934.0
(22) Date of filing: 15.09.2021
(51) Int. Cl.: G06N 10/60

(54) **AUTOMATED ALLOCATION SYSTEM FOR QUANTUM OPTIMIZATION PROBLEMS**

(71) Applicant: Ludwig-Maximilians-Universität München, 80539 München (DE)
(72) Inventor: Zielinski, Sebastian, 81545 München (DE); Gabor, Thomas, 86153 Augsburg (DE); Linnhoff-Popien, Claudia, 85652 Landsham (DE)
(74) Representative: Hofmann, Matthias

(57) **Abstract**

The present invention provides quantum computing pre-processing system comprising:
an input unit configured to receive a specification of an optimization problem, the specification comprising a problem matrix that corresponds to a standardized representation of the optimization problem, in particular an Ising and/or QUBO representation of the optimization problem;
a machine learning-based prediction unit for predicting a quantum computer class which is optimal for solving the optimization problem, wherein the ML-based prediction unit has been trained using standardized representations of optimization problems; and
an output unit for outputting the quantum computer class for selection of a quantum computer.

## Description

### TECHNICAL FIELD

The present invention is in the field of quantum-based optimization. It involves the automatic assignment of complex optimization problems to quantum computers using a machine learning (ML) based preprocessing system.

### BACKGROUND

The implementation of quantum computing (QC) enables new approaches to efficiently solving optimization problems that due to their complexity were previously not efficiently solvable for certain classical architectures. Quantum computing comprises two different paradigms, the quantum gate model and quantum annealing. The information carriers in quantum computers are quantum bits (qubits). Currently, there are numerous ways to physically represent qubits: By superconducting materials/circuits, by nitrogen vacancy centers, by neutral atoms, by ion traps, and many more. In the quantum gate model, in analogy to previous classical computers, quantum circuits are used to manipulate the qubits and realize algorithms. In quantum annealing, on the other hand, there are no programmable gates. Here, problem solving takes place through a continuous adiabatic process.

In order to solve an optimization problem on quantum computers, this task is transformed into a QUBO (quadratic unconstrained binary optimization) model specification or a mathematically equivalent Ising model specification. After performing this transformation, the user decides on which quantum computer and with which method the respective task is to be solved. Typically, the quantum computers are implemented as special hardware like quantum gate computers, quantum annealers and quantum-inspired hardware such as the digital annealer. In addition, methods on classical architectures, such as simulated annealing, tabu search, or other heuristic and meta-heuristic methods, are also available.

The different architectures and methods each have different advantages and disadvantages. For example, in current quantum gate architectures, the quality of the results is strongly dependent on the circuit depth (= number of quantum gates connected in series). The deeper the circuit, the more one must expect a loss of result quality in current quantum gate computers. The picture is similar for quantum annealers. The qubits are not fully interconnected in quantum annealers. This means that only certain qubits can interact with each other. For the user, this means that tasks must first be mapped as efficiently as possible onto the hardware graph in order to be able to solve them. Currently, this is very successful for smaller tasks but poses a challenge for larger tasks. A user with optimization problems therefore currently has to make a large number of important decisions, which directly influence the quality of the solution. The question of the architecture used arises. With quantum architectures, the exploitation of quantum effects helps to solve the problem, but pre- and post-processing steps may have to be performed in order to solve the problem optimally. Moreover, the solution quality decreases if no quantum algorithm is known that runs efficiently on current quantum computers.

In classical architectures such as the Digital Annealer, quantum effects are not exploited in the solution search and one can rely on a fully-interconnected hardware architecture, where any problem bit can interact with any other problem bit. Because all bits can interact with each other, there is no need of an embedding, which means that potentially somewhat larger problems can be solved. Due to the lack of quantum effects, however, there is no reason to expect a significant breakthrough in computational capabilities compared to other purely classical approaches. Nonetheless, in addition to special conventional architectures, methods can also be used which run on conventional classical architectures. Just as with classical special hardware, larger tasks can be solved here, but very often no optimal solution is obtained for relevant tasks and the solution times are high.

After the user has selected an appropriate quantum or classical architecture or solution method, they must manually define the appropriate parameter settings for the selected architecture or method. Each of these parameters must be set by the user according to experience or "best practices".

### SUMMARY

There is a need for a system that overcomes one or more of the above-mentioned problems of the prior art.

A first aspect of the invention provides a quantum computing preprocessing system comprising:
an input unit configured to receive a specification of an optimization problem, the specification comprising a problem matrix that corresponds to a standardized representation of the optimization problem, in particular an Ising and/or QUBO representation of the optimization problem;
a machine learning-based prediction unit for predicting a quantum computer class which is optimal for solving the optimization problem, wherein the ML-based prediction unit has been trained using standardized representations of optimization problems; and
an output unit for outputting the quantum computer class for selection of a quantum computer.

The system of the first aspect can determine the optimum class of quantum computer suitable for solving the given optimization problem. Thus, it can be ensured that out of a plurality of available computers, the computer that is best suitable for the problem at hand is selected to solve the problem, and a waste of computing resources is avoided.

The quantum computing preprocessing system performs allocation of computing resources in that it determines the suitable computing resource. The predicted quantum computer class can also include a traditional computer, e.g. for scenarios where a traditional computer is more suitable for solving the optimization problem.

The machine learning-based prediction unit can comprise any of the known machine learning-based classifiers, e.g. a Support Vector Machine, a neural network, a deep neural network and/or other classifiers.

The machine learning-based prediction unit can further comprise a machine learning-based regressor for predicting parameter values.

Preferably, the system can further be configured to predict not only a quantum computer class, but also an appropriate configuration for a quantum computer belonging to that quantum computer class.

The similarity between different problem matrices can be determined using a suitable similarity measure. For example, the Manhattan distance, which sums over the amount of the differences of all entries of the two matrices, has been shown in experiments to give good results. In some embodiments, a normalization of the values of the matrices can be performed before determining the similarity based on the Manhattan distance between the normalized matrices.

In a first implementation of the system according to the first aspect, the system further comprises a training unit configured to train the prediction unit, wherein the training unit is configured to:
- instruct a plurality of computers, comprising quantum computers from different quantum computer classes, to solve a plurality of training optimization problems;
- for each of the plurality of training optimization problems:
   - determine a computation accuracy and/or a computation time; and
   - determine a score based on the computation accuracy and/or the computation time;
   - train a regression model using a plurality of standardized representations of the plurality of training optimization problems as input and a corresponding plurality computation scores as output,
wherein the prediction unit is configured to predict the quantum computer class for which the regression model predicts a best score.

This implementation has the advantage that the preprocessing system can be trained simply by processing a number of optimization problems on a plurality of computers, wherein the plurality of computers comprises quantum computers from different quantum computer classes.

It is understood that, depending on how the score is calculated, "best score" can refer to a score with a highest value or a lowest value.

For example, the score can be calculated as a weighted sum of the computation time and an error between a predicted solution and a ground-truth solution. In this case, a lower score is better and the best score is the score with the lowest value.

In other words, the score of the above-mentioned implementation can be obtained as a weighted sum of individual score component values. In other embodiments, the score can be obtained based on a rule for composing the individual score component values. For example, the quantum computer class can be predicted based on a first score component and a second score component may be considered only if for two different quantum computer classes the first score component values are the same or almost the same (e.g. within a predetermined distance).

In the context of deep learning systems, it may not be necessary to use a score function, but the optimum quantum computer class can be predicted directly.

In other embodiments, the score may be a quality measure and higher values may correspond to higher quality solutions.

Once the prediction unit has been trained accordingly, new problems can be automatically assigned to the appropriate computer for solving the problem. The entire process of training the system and applying it to new problems can be implemented completely automatic and can continue during operation of the system.

In a further implementation of the system of the first aspect, the prediction unit further comprises a regression unit for determining a host quantum computer parameter set which is suitable to be used for computing the optimization problem on a quantum computer of the predicted quantum computer class.

This implementation has the advantage that parameters for the selected (quantum) computer can be determined at the same time as selecting the quantum computer.

In a further implementation of the system of the first aspect, the problem matrix is of a first dimensionality and wherein the ML-based prediction unit is configured to receive matrices of a second dimensionality as input, wherein the second dimensionality is different from the first dimensionality, and wherein the system further comprises a conversion unit for converting the input matrix into a converted input matrix that is of the second dimensionality, wherein preferably the converting comprises interpolating between matrices of first and second dimensionality.

This implementation has the advantage that when training has been performed with problems of a certain complexity order and corresponding dimensionality of the problem matrices, the trained system can still be applied and generate appropriate predictions for problems of a different complexity order.

For example, when the training data are available with a lower dimensionality, the to-be-classified problem matrix can be interpolated to the lower dimensionality of the training data using a standard interpolation algorithm such as piecewise constant interpolation, linear interpolation, polynomial interpolation or spline interpolation.

In another embodiment, the QUBO matrices can be enlarged and padded with zeros without changing their meaning. For example, if, two QUBOs of different sizes should be compared, e.g. as part of training or applying the machine learning algorithm, the smaller matrix can be padded with zeros in order to make a semantically correct comparison. Experiments have confirmed that this padding does not detrimentally affect the machine learning process. Thus, in this way, a simple "up-interpolation" is always trivially possible.

Ideally, the ML pipeline is trained on as large a value as possible, perhaps even on an unrealistically large value, in order to remain stable for as long as possible. If solvable problem QUBOs then exceed in size the structure of the ML process, it may at some point be necessary to re-train (with larger input), but this is not a major obstacle at the current state of the art.

In a further implementation of the system of the first aspect, the ML-based prediction unit comprises a pattern detection unit configured to detect whether the input matrix comprises a pattern that appears in a matching matrix of a plurality of reference matrices, wherein preferably the ML-based prediction unit is configured to predict the quantum computer class based on a label of the matching matrix.

This implementation provides an alternative solution for determining an appropriate quantum computer class in cases where training data have different dimensionality compared to the problem for which a quantum computer should be selected.

In a further implementation of the system of the first aspect, the ML-based prediction unit has been trained in a training phase with a training data set comprising optimization problems from at least 12, preferably at least 18, in particular all of Karp's 21 NP-complete problems.

Experiments have shown that if the training data set is chosen in this matter, the prediction unit is trained with an appropriate mix of different problem classes and thus can make predictions for a variety of optimization problems.

In a preferred embodiment, the ML-based prediction unit comprises a hierarchical multi-agent subsystem, comprising:
- a top-level agent configured to classify the optimization problem into a problem class and to transmit the optimization problem specification to a mid-level agent which is best suited for processing the problem;
- one or more mid-level agents configured to receive optimization problem specifications for a specific problem class, classify the optimization problem specification into a quantum computer hardware class, determine a set of mid-level optimization parameters for a host quantum computer, create a mid-level problem specification and transmit the mid-level problem specification to a best-suited bottom-level agent; and
- one or more QC hardware-specific bottom-level agents configured to receive mid-level problem specifications, perform a hardware-specific deconstruction step, determine parameters necessary for execution on a specific quantum computer instance and create a host quantum computing optimization problem, HQCOP, specification for execution on the host quantum computer.

Preferably, a subset of the one or more mid-level agents is configured to receive optimization problem specifications for a specific problem and/or hardware class, perform a classification of the optimization problem specification into a quantum computer hardware class, perform an embedding mapping of the optimization problem specification into an embedded quantum computing optimization problem, EQCOP, specification satisfying the physical topology constraints of the host, determine a set of mid-level optimization parameters for the QC solver, create a mid-level problem specification and distribute the mid-level problem specification to a best-suited bottom-level agent.

Preferably, a subset of the mid-level agents is designated to solve specific problem classes or hardware classes and interact with each other to mutually improve ML-based classification and regression models using, e.g., a generative adversarial network, GAN, learning algorithm.

A further aspect of the invention refers to a computer-readable storage medium storing program code, the program code comprising instructions that when executed by a processor carry out the method of the second aspect or one of the implementations of the second aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is a block diagram illustrating a system in accordance with an embodiment of the present invention, and
- FIG. 2: is a block diagram illustrating a system in accordance with a further embodiment of the present invention,

In the prior art, a user with optimization problems currently has to make a large number of important decisions which directly influence the solution quality. The question arises as to the architecture used. With quantum architectures, the exploitation of quantum effects helps to solve the problem, but pre- and post-processing steps may have to be performed in order to solve the problem optimally. For this, the solution quality decreases unless a quantum algorithm is known that runs efficiently on current machines. In classical architectures such as the Digital Annealer, quantum effects are not exploited in the solution search and one can rely on a fully-interconnected hardware architecture (any problem bit can interact with any other problem bit). Because all bits can interact with each other, there is no need for an embedding (in contrast to quantum annealing), which means that potentially somewhat larger problems can be solved. Due to the lack of quantum effects, however, a loss in the quality of the results must be expected. In addition to classical special architectures, methods can also be used which run on conventional classical architectures. Just as with classic special hardware, larger tasks can be solved here, but very often no optimal solution is obtained for relevant tasks and the solution times are high. After the user has selected an appropriate quantum or classical architecture or solution method, they must manually define the appropriate parameter settings for the selected architecture or method. Each of these parameters must be set by the user according to experience or "best practices".

Specifically, the problem is that the user has to make a decision manually, based on their experience or according to recommendations from the manufacturer of the respective hardware or through relevant technical literature, with which architecture or with which method they would like to solve a certain task. This can lead to the fact that the task is not solved optimally (concerning the run time, the quality of the solution, ...) since the best machine and/or the best procedure with the best parameter settings in each case for the solution of the respective task was not selected. If the user does not know which is the best machine or the best method for his task, they have to solve it with different machines or methods available to guarantee that the best possible solution is found. This leads to additional costs.

In order to solve tasks on different architectures using different processes, the decision as to which machine is to be used must be made consciously and manually by the user. In practice, this leads to tasks simply being solved several times with several machines or processes at the same time. Parameter settings are currently also found out by repeatedly solving the tasks. So far, there are no automatisms that could take over this task.

One or more of these problems of the prior art are solved by the following embodiments.

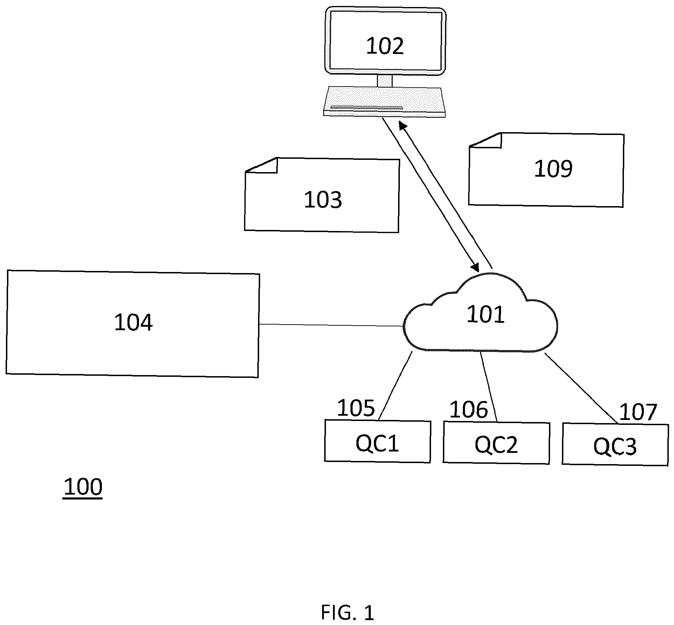

FIG. 1 is an example diagram of a data processing system in which illustrative embodiments maybe implemented.

Data processing environment 100 comprises a network of computers and quantum computers in which illustrative embodiments maybe implemented. Data processing environment 100 includes network 101. Network 101 is the medium used to provide communication links between various computers and quantum computers. Network 101 may include connections such as wire, wireless communication links or fiber optic cables.

Client 102 is a terminal computer that communicates via network 101 with the preprocessing system 104 and sends optimization problem specifications to the ML-based classification subsystem 104 und receives optimization results from it.

Host computers QC1 105, QC2 106 and QC₃ 107 are coupled to network 101. Preferably, the host computers QC1 105, QC2 106 and QC₃ 107 are quantum computers.

The preprocessing system 104 is a conventional data processing system and couples to network 101. In an embodiment, ML-based classification subsystem 104 is configured to classify the IQCOP specification into a problem class, to identify the host quantum computer QC_BEST from the set of host quantum computers QC1 105, QC2 106 and QC₃ 107 that can best solve the given quantum computing optimization problem, to dispatch the IQCOP specification to the host quantum computer QC_BEST, to receive the optimization result from quantum computer QC_BEST and to forward the optimization result to client 102.

Preprocessing system 104 can automatically decide, based on criteria of the formulation of the respective task or the structure of the task as well as the respective hardware or process specifications, which is the best hardware or the best process for the respective task. Further, the system 104 can arrange the computation of the optimization problem with the (automatically determined) optimal parameter values for the respective task on the automatically determined hardware or with the automatically determined method.

FIG. 1 is intended as an example, and not as an architectural limitation for different illustrative embodiments. The number of quantum computers available to the optimization system might be large. Access to the quantum computers might be provided as services from third-party providers. The number of clients accessing the optimization system might be large. The clients might be user interfaces for human users executed on devices like desktop or laptop computers, tablet computers or terminals, or they might be backend applications executed for example on servers or cloud computers.

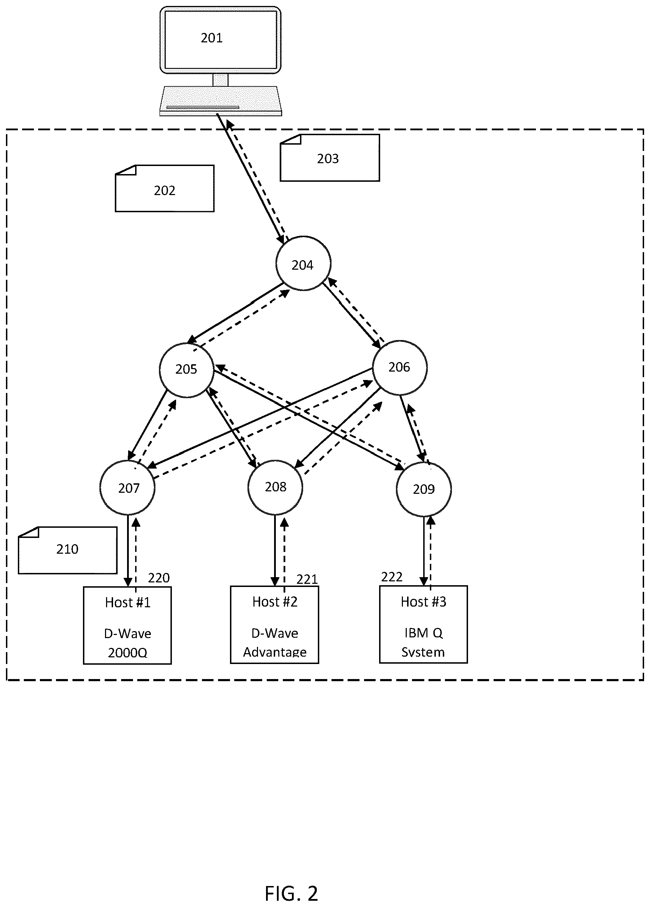

FIG. 2 is an example diagram of a multi-agent data processing system in which illustrative embodiments may be implemented.

Client 201 is a computer that communicates with a top-level agent 204 and sends IQCOP specifications to the top-level agent 204 und receives optimization results from it.

Top-level agent 204 comprises a computer program which is configured to
- receive a optimization problem specification from client 201;
- perform a first-level analysis;
- classify the optimization problem specifications into one of a plurality of problem classes, wherein the plurality of problem classes preferably includes the problem classes "Knapsack problems" or "Job sequence problems";
- distribute the optimization problem specifications to Knapsack Problems Mid-Level Agent 205 or to Job Sequencing Problems Mid-Level Agent 206 in dependence of the outcome of the problem classification;
- receive optimization results from mid-level agents 205 and 206; and
- send the optimization results to the top-level agent 204.

Mid-level agents 205 and 206 comprise computer programs which are configured to
- receive specification of an optimization problem from top-level agent 204;
- classify the optimization problem specifications into one of a plurality of hardware classes, which in this embodiment includes hardware classes "D-Wave 2000", "D-Wave Advantage" and/or "IBM Q System One";
- send the problem specifications to QC Hardware-Specific Bottom-Level Agents 207, 208 and 209 in dependence of the outcome of the hardware classification;
- receive optimization results from QC Hardware-Specific Bottom-Level Agents 220, 221 and 222; and
- send the optimization results to the Top-level agent 204.

QC Hardware-Specific Bottom-Level Agents 207, 208 and 209 are computer programs which are configured to:
- receive a problem specification;
- perform a hardware-specific deconstruction step:
- determine parameters necessary for execution on the assigned quantum computers 220 (D-Wave 2000Q), 221 (D-Wave Advantage); and
- create a host quantum computing optimization problem (HQCOP) specification for execution on the assigned host quantum computer.

Host quantum computers 220, 221 and 222 are quantum computers with different hardware architectures and performance characteristics. Host quantum computer 220 is a "D-Wave 2000Q" annealer, host quantum computer 221 is a "D-Wave Advantage" annealer and host quantum computer 222 is an "IBM Q System One" quantum-gate computer.

Host quantum computers 220, 221 and 222 are each configured to:
- receive a host quantum computing optimization problem (HQCOP) specification;
- perform quantum optimization calculations and create an optimization result; and
- send the optimization result to the assigned QC hardware-specific bottom-level agents 207, 208 or 209, respectively.

FIG. 2 is intended as an example, and not as an architectural or conceptual limitation for different illustrative embodiments. The set of problem classes may embrace a large number of problem classes. The set of quantum computers may embrace a large number of quantum computers of different types. The number of quantum computers available to the optimization system might be large. The number of different quantum computer types might be large. Access to the quantum computers might be provided as services from third-party providers. The number of clients accessing the optimization system might be large. The clients might be user interfaces for human users executed on devices like desktop or laptop computers, tablet computers or terminals, or they might be backend applications executed for example on servers or cloud computers.

A further embodiment of the invention provides the following: After a user has transformed his task into the corresponding QUBO/Ising form, they can send it to a backend (server in the Internet, server in the local network, ...). The central component of the backend is a hierarchical multi-agent system in which the agents have been trained using reinforcement learning. In the lowest hierarchy level there are agents which are connected to one of the different hardware or software solvers (quantum gate computer, quantum annealer, digital annealer, classical solver) which can be used to solve the task. Each of these agents gradually learns to solve tasks of the complexity classes from Karp's 21 NP-Complete problems optimally on the architecture or with the procedure available to it. For training, the specification of the task as well as the hardware or procedure specifics were used. Thus, in a first step, the agents learned which instances of the different complexity classes work best with which parameter settings on the respective machine or with the respective procedure. A hierarchically superior agent is then trained to forward a concrete user task from one of the previously trained problem classes to the pre-trained agent that can best solve the task. After a sufficiently long training period, the multi-agent system is now able to independently select architectures or procedures with the respective parameter settings.

## Claims

1. A quantum computing pre-processing system (104) comprising:
an input unit configured to receive a specification of an optimization problem, the specification comprising a problem matrix that corresponds to a standardized representation of the optimization problem, in particular an Ising and/or QUBO representation of the optimization problem;
a machine learning-based prediction unit for predicting a quantum computer class which is optimal for solving the optimization problem, wherein the ML-based prediction unit has been trained using standardized representations of optimization problems; and
an output unit for outputting the quantum computer class for selection of a quantum computer (220-222).

2. The system (104) of claim 1, further comprising a training unit configured to train the prediction unit, wherein the training unit is configured to:
- instruct a plurality of computers (220-222), comprising quantum computers (220-222) from different quantum computer classes, to solve a plurality of training optimization problems;
- for each of the plurality of training optimization problems:
- determine a computation accuracy and/or a computation time; and
- determine a score based on the computation accuracy and/or the computation time;
- train a regression model using a plurality of standardized representations of the plurality of training optimization problems as input and a corresponding plurality computation scores as output,
wherein the prediction unit is configured to predict the quantum computer class for which the regression model predicts a highest score.

3. The system (104) of claim 1, wherein the prediction unit further comprises a regression unit for determining a host quantum computer (220-222) parameter set which is suitable to be used for computing the optimization problem on a quantum computer (220-222) of the predicted quantum computer class.

4. The system (104) of claim 1 or claim 3, wherein the problem matrix is of a first dimensionality and wherein the ML-based prediction unit is configured to receive matrices of a second dimensionality as input, wherein the second dimensionality is different from the first dimensionality, and wherein the system (104) further comprises a conversion unit for converting the input matrix into a converted input matrix that is of the second dimensionality,
wherein preferably the converting comprises interpolating between matrices of first and second dimensionality.

5. The system (104) of one of the previous claims, wherein the ML-based prediction unit comprises a pattern detection unit configured to detect whether the input matrix comprises a pattern that appears in a matching matrix of a plurality of reference matrices, wherein preferably the ML-based prediction unit is configured to predict the quantum computer class based on a label of the matching matrix.

6. The systems (104) of one of the previous claims, wherein the ML-based prediction unit has been trained in a training phase with a training data set comprising optimization problems from at least 12, preferably at least 18, in particular all of Karp's 21 NP-complete problems.

7. The system (104) of claim 1, wherein the ML-based prediction unit comprises a hierarchical multi-agent subsystem, comprising:
a top-level agent (204) configured optimization problem to classify the optimization problem specification into a problem class and to transmit the optimization problem specification to a mid-level agent (205, 206) which is best suited for processing the problem; and
one or more mid-level agents (205, 206) configured to receive optimization problem specifications for a specific problem or hardware class, classify the optimization problem specification into a quantum computer hardware class, determine a set of mid-level optimization parameters for a host quantum computer (220-222), create a mid-level problem specification and transmit the mid-level problem specification to a best-suited bottom-level agent; and
one or more QC hardware-specific bottom-level agents configured to receive mid-level problem specifications, perform a hardware-specific deconstruction step, determine parameters necessary for execution on a specific quantum computer instance and create a host quantum computing optimization problem, HQCOP, specification for execution on the host quantum computer (220-222).

8. The system (104) of claim 7, wherein a subset of the one or more mid-level agents (205, 206) is configured to receive optimization problem specifications for a specific problem and/or hardware class, perform a classification of the optimization problem specification into a quantum computer hardware class, perform an embedding mapping of the optimization problem specification into an embedded quantum computing optimization problem, EQCOP, specification satisfying the physical topology constraints of the host, determine a set of mid-level optimization parameters for the QC solver, create a mid-level problem specification and distribute the mid-level problem specification to a best-suited bottom-level agent.

9. The system (104) of claim 7 or 8, wherein a subset of the mid-level agents (205, 206) is designated to solve particular problem classes or hardware classes and is grouped into mid-level agent (205, 206) groups,
wherein agents in the mid-level agent group interact with each other by requesting a set of mid-level optimization parameters for the optimization problem, and/or
agents in the mid-level agent group interact with each other to determine which mid-level agent (205, 206) takes over the task of solving the optimization problem.

10. The system (104) of claim 7, wherein a subset of the mid-level agents (205, 206) is designated to solve specific problem classes or hardware classes and interact with each other to mutually improve ML-based classification and regression models using a generative adversarial network, GAN, learning algorithm.

11. A method for allocating quantum computing resources, the method comprising:
receiving a specification of an optimization problem, the specification comprising a problem matrix that corresponds to a standardized representation of the optimization problem, in particular an Ising and/or QUBO representation of the optimization problem;
predicting a quantum computer class which is optimal for solving the optimization problem, wherein the prediction is based on a machine learning-based model that has been trained using standardized representations of optimization problems; and
outputting the quantum computer class for selection of a quantum computer (220-222).
